# EUROPEAN PATENT SPECIFICATION

(11) **EP 4 441 150 B1**
(45) Date of publication and mention of the grant of the patent: **29.07.2026**
(21) Application number: 21965263.3
(22) Date of filing: 29.11.2021
(51) Int. Cl.: C08L 83/06, C08L 83/04, C08G 77/14, C08G 77/06, C08G 77/12, C08K 5/55

(54) **ROOM TEMPERATURE STORABLE ONE-PART POST CURABLE THERMALLY CONDUCTIVE SILICONE WITH VERTICAL STABILITY**
BEI RAUMTEMPERATUR LAGERFÄHIGES EINTEILIGES NACHHÄRTBARES WÄRMELEITFÄHIGES SILIKON MIT VERTIKALER STABILITÄT
SILICONE THERMOCONDUCTEUR POST-DURCISSABLE MONOCOMPOSANT POUVANT ÊTRE STOCKÉ À TEMPÉRATURE AMBIANTE ET PRÉSENTANT UNE STABILITÉ VERTICALE

(43) Date of publication of application: 09.10.2024
(73) Proprietor: Dow Silicones Corporation, Midland, Michigan 48686 (US)
(72) Inventor: HUANG, Yan, Shanghai 201203 (CN); BHAGWAGAR, Dorab, Auburn, Michigan 48611 (US); CHEN, Chen, Shanghai 201203 (CN); ZHENG, Yan, Shanghai 201203 (CN); LIMA, Jorge, 7180 Seneffe (BE); CAO, Zhongwei, Shanghai 201203 (CN)
(74) Representative: Murgitroyd & Company
(86) International application number: PCT/CN2021/133870
(87) International publication number: WO 2023/092530

(56) References cited:
- WO-A1-2014/018814
- WO-A1-2014/124362
- WO-A1-2015/023001
- CN-A- 101 056 945
- JP-A- 2005 194 479
- JP-A- 2019 179 089
- JP-A- H0 429 748
- KR-A- 20210 084 048
- US-A1- 2015 004 336
- US-A1- 2018 208 767
- US-A1- 2019 092 993
- US-A1- 2021 198 489

## Description

### Field of the Invention

The present invention relates to one-part curable polysiloxane compositions that can be used as thermally conductive interface materials as well as use of such compositions as thermal interface materials.

### Introduction

An industry drive to smaller and more powerful electronic devices has increased demands on thermally conductive materials useful for dissipating heat generated in such devices. For instance, the telecommunications industry is going through a generational shift to 5G networks, which demand highly integrated electrical devices with smaller sizes and that brings a requirement for double the power requirements (1200 Watts from 600 Watts). The heat generated by the high power in the smaller devices would damage the device if not efficiently dissipated. Thermally conductive interface materials are often used in electronics to thermally couple heat generating components and heat dissipating components.

There are different kinds of thermally conductive interface materials. Thermal putties are pre-cured or non-curable materials that can be formulated into thermally conductive interface materials. A benefit with thermal putties is that there is no concern with preventing premature curing of the material while storing or handling. A challenge with thermal putties is that they are thick, difficult to dispense, and provide poor "vertical stayability" in thick gap (greater than 0.5 millimeter width) applications. Vertical stayability is a measure of how well a material stays in place versus sliding or sagging vertically when positioned between components and oriented with the gap between components oriented vertically to gravity. Curable thermally conductive interface materials can overcome some of the challenges with thermal putties, but have their own challenges. 2-part curable thermally conductive interface materials comprise a system of two reactants that react and cure shortly after mixing together. Prior to curing, they tend to have a relatively low viscosity which makes them easier to apply than thermal putties. However, 2-part curable thermally conductive interface materials require storage of two reactants and precise mixing of them just prior to application. There are also 1-part curable thermally conductive interface materials which also offer a lower viscosity material for ease of application and then cure to a thicker material after application. A challenge with 1-part curable thermally conductive interface materials is that they have to be stored at cold temperature (approximately -18 degrees Celsius) prior to use in order to prevent curing prior to application.

Patent US 2019/092993 describes compositions for preparing thermal interface adhesives or greases having good elasticity, elongation and hardness properties after cure and comprising a vinyl-containing organopolysiloxane, an organopolysikloxane comprising SiH groups, a Pt-based hydrosilylation catalyst, thermally conductive filler particles and platelet boron nitride BN particles.

Patent JP 2005 194479 relates to curable silicone compositions suitable to prepare heat-radiation moulded products wherein the composition comprises a silicone gel and a heat conductive fillers and wherein the silicone composition exhibits good mixing properties before cure. The heat conductive fillers may be alumina and/or boron nitride and the silicone gel is obtained by addition cure of a vinyl-containing polysiloxane in presence of a SiH-containing polysiloxane and Pt-based hydrosilylation catalyst. The composition may further comprise a polyether polymer such as a polysiloxane-polyoxyethylene copolymer as processability or miscibility aid.

Patent US 2015/004336 is directed to a heat-transfer textile ink used for textile coating and comprising a silicone ink base composition and a heat transfer adhesion promoter wherein the silicone ink base composition comprises an organopolysiloxane having alkenyl groups, an organopolysiloxane having SiH groups, 5-50 parts by weight of reinforcing filler such as silica that may be surface treated, 0.05-4.5 parts by weight of a polysiloxane-polyether copolymer and a Pt-based catalyst. The polyether copolymer is used to maintain stability after mixing.

Patent WO 2015/023001 describes thermally conductive silicone compositions comprising a polysiloxane endcapped by a naphthyl group used as a surface treatment agent, a thermally conductive filler, a vinyl-containing organopolysiloxane, a SiH-containing polysiloxane and a Pt-based hydrosilylation catalyst. The thermally conductive filler is a blend of alumina particles, granular boron nitride(BN)and plate-like BN.

Finally, patent KR 2021 0084048 discloses silicone compositions with good thermal conductivity used for a laser printer fixing roller. The compositions comprise a silicone component and a thermally conductive filler component, wherein the silicone component comprises a vinyl-containing organopolysiloxane, a SiH-containing polysiloxane and a Pt-based hydrosilylation catalyst. The thermally conductive filler comprises a blend of aluminum nitride AlN particles and plate-like BN.

It would advance the art of thermally conductive materials to provide a 1-part curable composition that has storage stability at 25 degrees Celsius (°C) for at least 6 months as determined by the 25°C Storability Test described herein below, has a thermal conductivity of 6 Watts per meter*Kelvin (W/m*K) or more as determined by ASTM-5470 using a LONGWIN instrument, is highly extrudable as demonstrated by demonstrating greater than 15 grams per minute (g/min) extrusion rate in the Extrusion Test described hereinbelow, demonstrates crack free performance in a gap of 1.0 millimeters and excellent vertical stayability as demonstrated by an absence of sliding or cracking in the Vertical Stayability test described hereinbelow, and has a disassembly force of less than 0.15 megaPascals in the Disassembly Force test described hereinbelow.

### BRIEF SUMMARY OF THE INVENTION

The present invention provides a 1-part curable composition that has storage stability at 25 degrees Celsius (°C) for at least 6 months as determined by the 25°C Storability Test described herein below, has a thermal conductivity of 6 Watts per meter*Kelvin (W/m*K) or more as determined by ASTM-5470 using a LONGWIN instrument, is highly extrudable as demonstrated by demonstrating greater than 15 grams per minute (g/min) extrusion rate in the Extrusion Test described hereinbelow, demonstrates crack free performance in a gap of 1.0 millimeters and excellent vertical stayability as demonstrated by an absence of sliding or cracking in the Vertical Stayability Test described hereinbelow, and has a disassembly force of less than 0.15 megaPascals in the Disassembly Force test described hereinbelow.

Surprisingly, the present invention contains a polyether component and a platelet boron nitride component to provide vertical stayability. Additionally, the present invention is a result of discovering the appropriate ratio of silyl-hydride (SiH) groups to vinyl groups (SiH/Vi ratio) to achieve crack free performance in a gap of 1.0 millimeters or more.

In a first aspect, the present invention is a curable composition comprising: (a) 1.6 to 2.5 weight-percent of a vinyl-functional silicone polymer having two or more vinyl groups per molecule; (b) at least one silyl-hydride functional polysiloxane crosslinker that contains at least two silyl-hydride group per molecule and that is present at a concentration to provide a molar ratio of silyl-hydride to vinyl for the composition that is in a range of 0.3 to 1.0; (c) a platinum-based hydrosilylation catalyst encapsulated in a thermoplastic polymer, where the thermoplastic polymer has a glass transition temperature in a range of 60 to 80 degrees Celsius as determined by ASTM D7426 over a range of -60 to 200 °C at a ramp rate of 10 °C per minute; (d) 93.5 to 96 weight-percent of thermally conductive filler particles other than platelet boron nitride particles; (e) 0.2 to 2.5 weight-percent of platelet boron nitride particles; (f) 0.1 to 1.0 weight-percent of a polyether additive selected from one or any combination of more than one of a group consisting of polyether-based polymers and polyorganosiloxane-polyoxyalkylene copolymers; (g) 0.10 to 5.0 weight-percent of a filler treating agent; and (h) zero to 0.5 weight-percent of a cure inhibitor; with weight-percent relative to curable composition weight.

In a second aspect, the present invention is A process for using the composition of the first aspect, the process comprising applying the composition between and in contact with two components and then heating the curable composition to a temperature above the glass transition temperature of the thermoplastic polymer encapsulating the platinum catalyst to cure the curable composition while in place between the components

Compositions of the present invention are useful as thermally conductive materials between components such as electronic components.

### DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to ASTM International methods; EN refers to European Norm; DIN refers to Deutsches Institut für Normung; ISO refers to International Organization for Standards; and UL refers to Underwriters Laboratory.

Products identified by their tradename refer to the compositions available under those tradenames on the priority date of this document.

"Multiple" means two or more. "And/or" means "and, or as an alternative". All ranges include endpoints unless otherwise indicated.

The present invention, in one aspect. is a curable composition. A curable composition can undergo a crosslinking reaction ("curing"). In the present composition, the crosslinking reaction is a hydrosilylation reaction between vinyl-functional silicone polymer components and silyl-hydride (Si-H) functional polysiloxane crosslinker.

The vinyl-functional silicone polymer contains on average two or more vinyl groups per molecule. While any such vinyl-functional silicone polymer should work, it is preferable for the vinyl-functional silicone polymer to comprise two or more terminal vinyl groups. Desirably, the vinyl-functional silicone polymer has an average chemical structure (I):

RₓVi₍₃₋ₓ₎SiO-(R₂SiO)_{d}-SiR_{y}Vi_{(3-y)} (I)

where:
R is independently in each occurrence selected from alkyl and aryl groups having from one to 6 carbon atoms. The R group can have one carbon or more, 2 carbons or more, 3 carbons or more, 4 carbons or more, even 5 carbons or more while at the same time 6 carbons or fewer, 5 carbons or fewer, 4 carbons or fewer, 3 carbons or fewer, or even 2 carbons or fewer. Desirably, the R group is independently in each occurrence selected from methyl and phenyl groups.
Vi is a vinyl group (-CH=CH₂).
Subscripts x and y indicate the average number of terminal R groups on either end and are each independently in each occurrence selected from a value in a range of zero to 2. The average values of x and y can be independently in each occurrence zero or more, even one or more and at the same time 2 or less, even one or less. The values of x can be equal to the values of y. Desirably, both x and y is 2 in each occurrence.
Subscript d is the average number of (R₂SiO) groups and has an average value of 30 or more, 40 or more, 50 or more, 60 or more 70 or more, 80 or more, 90 or more, 100 or more, 120 or more, 140 or more, 160 or more, 180 or more, 200 or more, 220 or more, 240 or more, 260 or more, 280 or more, 300 or more, 320 or more, 340 or more, 360 or more, 380 or more, 400 or more, even 450 or more, and at the same time 500 or less, 480 or less, 460 or less, 440 or less, 420 or less, 400 or less, 380 or less, 360 or less, 340 or less, 320 or less, 300 or less, 280 or less, 260 or less, 240 or less, 240 or less, 220 or less, 200 or less, 180 or less, 160 or less, 140 or less, 120 or less, 100 or less, 80 or less, 60 or less, even 40 or less.

The concentration of vinyl-functional polysiloxane is desirably 1.5 weight-percent (wt%) or more, preferably 1.6 wt% or more. 1.7 wt% or more, 1.8 wt% or more, 1.9 wt% or more, 2.0 wt% or more, 2.1 wt% or more, 2.2 wt% or more, 2.3 wt% or more, even 2.4 wt% or more while at the same time is typically 2.5 wt% or less, and can be 2.4 wt% or less, 2.3 wt% or less, 2.2 wt% or less, 2.1 wt% or less, 2.0 wt% or less, 1.9 wt% or less, 1.8 wt% or less, or even 1.7 wt% or less with wt% relative to curable composition weight.

The silyl-hydride functional polysiloxane crosslinker contains at least two silyl-hydride (SiH) groups on per molecule. The silyl-hydride groups can be pendant, terminal or a combination of both pendant and terminal. "Terminal" groups are on end siloxane groups of a molecule. "End" siloxane groups are attached to only one other siloxane group. "Pendant" groups are on interior siloxane group - siloxane groups bound to at least two other siloxane groups - of the molecule. "Siloxane group" is a group containing SiO that is bound to another Si through the oxygen of the SiO. Desirably, the silyl-hydride functional polysiloxane crosslinker has an average chemical structure (II):

R₍₃₋ₕ₎H_{b}SiO-(HRSiO)ₐ-(R₂SiO)_{b}-SiH_{h'}R_{(3-h')} (II)

where:
R is independently in each occurrence selected from alkyl and aryl groups having from one to 6 carbon atoms. The R group can have one carbon or more, 2 carbons or more, 3 carbons or more, 4 carbons or more, even 5 carbons or more while at the same time 6 carbons or fewer, 5 carbons or fewer, 4 carbons or fewer, 3 carbons or fewer, or even 2 carbons or fewer. Desirably, the R group is independently in each occurrence selected from methyl and phenyl groups.
H is a hydrogen atom,
Subscripts h and h' refer the average number of terminal hydrogen atoms on either end and each are independently in each occurrence selected from a value in a range of zero to 3 provided the combination of a, h and h' is at least 2. Preferably, h and h' are interpedently in each occurrence zero or more, one or more, even 2 or more while at the same time 3 or less, 2 or less, even one or less. More preferably, h and h' have the same value. Most preferably, h and h' are both zero.
Subscript a is the average number of (HRSiO) groups per molecule. If h and h' are both zero then a is 2 or more. If h and h' are both non-zero then subscript a can be zero provided the combination of a, h and h' is at least 2. Preferably, subscript a is one or more, and can be two or more and can be 3 or more, 4 or more, 5 or more, 6 or more, 7 or more, 8 or more, even 9 or more and at the same time typically is 10 or less, 9 or less, 8 or less, 7 or less, 6 or less, 5 or less, 4 or less, 3 or less, even 2 or less.
Subscript b is the average number of (R₂SiO) groups per molecule. Generally, subscript b is 5 or more, 10 or more, 20 or more, 25 or more, 30 or more, 40 or more, 50 or more, and can be 75 or more, 100 or more, 125 or more, 150 or more, 175 or more, even 190 or more while at the same time is typically 200 or less, 175 or less, 150 or less, 125 or less, 100 or less, 75 or less, 50 or less, 40 or less, 30 or less, even 25 or less, or even 20 or less.

For example, the silyl-hydride functional polysiloxane crosslinker can have an average chemical structure: (CH₃)₃SiO-[Si(CH₃)₂O]₂₅-[Si(CH₃)HO]₂Si(CH₃)₃.

The concentration of silyl-hydride functional polysiloxane crosslinker is desirably sufficient enough to provide a molar ratio of silyl-hydride to vinyl groups (SiH/Vi) that is 0.3 or more, and can be 0.4 or more, 0.5 or more, 0.6 or more, 0.7 or more, 0.8 or more, 0.9 or more, while at the same time is desirably 1.0 or less, 0.95 or less, 0.85 or less, and can be 0.75 or less, 0.65 or less, 0.55 or less, 0.45 or less, or even 0.35 or less. It has surprisingly been discovered that when the curable composition has an SiH/Vi ratio in this range the composition curs and remains crack-free in a gap of 1.0 millimeters in the Vertical Stayability test described hereinbelow. Determine the value for SiH/Vi by nuclear magnetic resonance spectroscopy.

The curable composition also comprises a platinum-based hydrosilylation catalyst that is encapsulated in a thermoplastic polymer. The platinum-based hydrosilylation catalyst can be any that are useful in hydrosilylation chemistry. Platinum-based hydrosilylation catalysts include any one or any combination of compounds and complexes selected from platinum (0)-1,3-divinyl-1,1,3,3-tetramethyldisiloxane (Karstedt's catalyst), H₂PtCl₆, di-µ.-carbonyl di-.π.-cyclopentadienyldinickel, platinum-carbonyl complexes, platinum-divinyltetramethyldisiloxane complexes, platinum cyclovinylmethylsiloxane complexes, platinum acetylacetonate (acac). platinum black, platinum compounds such as chloroplatinic acid, chloroplatinic acid hexahydrate, a reaction product of chloroplatinic acid and a monohydric alcohol, platinum bis(ethylacetoacetate), platinum bis(acetylacetonate), and platinum dichloride.

The thermoplastic polymer that encapsulates the platinum-based hydrosilylation catalyst has a glass transition temperature (Tg) in a range of 60 to 80 degrees Celsius (°C). Preferably the glass transition temperature of the thermoplastic polymer is 60 °C or higher, and can be 62 °C or higher, 64 °C or higher. 66 °C or higher, 68 °C or higher, 70 °C or higher, 72 °C or higher, 74 °C or higher, 76 °C or higher, even 78 °C or higher while at the same time is generally 80 °C or lower, and can be 78 °C or lower, 76 °C or lower, 74 °C or lower, 72 °C or lower, 70 °C or lower, 68 °C or lower, 66 °C or lower, 64 °C or lower, or even 62 °C or lower. The Tg of the thermoplastic polymer is 60 °C or higher in order to conceal the catalyst from the vinyl-functional polymer and silyl-hydride functional polysiloxane crosslinker at typical room temperatures (approximately 25 °C) and even temperatures above that for warmer climates and storage conditions thereby inhibiting catalyzed hydrosilylation crosslinking at room temperature. Above the Tg of the thermoplastic polymer, the polymer softens and reveals the hydrosilylation catalyst allowing it to catalyze hydrosilylation crosslinking. Determine the Tg of the thermoplastic polymer by differential scanning calorimetry (DSC) according to ASTM D7426 over a temperature ramp from -60 to 200 °C at a ramp rate of 10 °C per minute to determine endothermic glass transition temperature (Tg).

The concentration of platinum-based hydrosilylation catalyst is desirably sufficient to provide a platinum concentration within a range of 0.1 to 50 weight part per million weight parts (ppm) based on curable composition weight. The concentration of platinum-based hydrosilylation catalyst can be that which provides a platinum concentration of 0.1 ppm or more, 0.2 ppm or more, 0.3 ppm or more, 0.4 ppm or more, 0.5 ppm or more, 0.6 ppm or more, 0.7 ppm or more, 0.8 ppm or more, 0.9 ppm or more, 1.0 ppm or more, 5.0 ppm or more, 10 ppm or more, 15 ppm or more, 20 ppm or more, 25 ppm or more, 30 ppm or more, 35 ppm or more, 40 ppm or more, even 45 ppm or more while at the same time is typically 50 ppm or less, even 45 ppm or less, 40 ppm or less, 35 ppm or less, 30 ppm or less, 25 ppm or less, 20 ppm or less, 15 ppm or less, 10 ppm or less, 5.0 ppm or less, even 1.0 ppm or less with ppm relative to curable composition weight.

The curable composition further comprises platelet boron nitride particles. Platelet boron nitride particles have a plate-like shape that is much thinner than it is wide or long. Typically, the thickness is 0.5 micrometers or more, preferably one micrometer or more, 2 micrometers or more, 3 micrometers or more, 4 micrometers or more, even 5 micrometers or more while at the same time the thickness is typically 20 micrometers or less, even 15 micrometers or less, or 10 micrometers or less. At the same time, the average of the width and length dimensions is typically 100 micrometers or less, even 80 micrometers or less, 60 micrometers or less, 50 micrometers or less. even 45 micrometers or less, or 40 micrometers or less while at the same time is usually 35 micrometer or more, even 40 micrometers or more.

The platelet boron nitride particles serves as both a thermally conductive filler, but the platelet shape contributes to the vertical stayability of the curable composition. The concentration of platelet boron nitride particles in the curable composition is typically 0.2 wt% or more, preferably 0.3 wt% or more, 0.4 wt% or more, even 0.5 wt% or more while at the same time is typically 2.5 wt% or less, even 2.0 wt% or less, 1.5 wt% or less, 1.0 wt% or less, 0.8 wt% or less, even 0.6 wt% or less or 0.5 wt% or less with wt% relative to curable composition weight.

The curable composition further comprises thermally conductive filler particles other than the platelet boron nitride particles. The thermally conductive filler particles all help contribute to increasing the thermal conductivity through the curable composition before and after curing of the curable composition. The thermally conductive filler particles other than the platelet boron nitride particles can include any one or combination of more than one thermally conductive filler particle useful in thermal interface materials including aluminum oxide ("alumina") particles, zinc oxide (ZnO) particles, aluminum nitride (AlN) particles, silicon carbide, magnesium oxide, aluminum trihydrate, graphite, carbon fiber, and graphene.

It can be desirable to use a combination of thermally conductive filler particles of different sizes to facilitate packing of high concentrations of the particles in the curable composition. For instance, the thermally conductive filler particles other than the platelet boron nitride particles can comprise thermally conductive filler particles of two different average sizes, three different average sizes, four different average sizes or even more. For example, the thermally conductive filler particles other than the platelet boron nitride particles can be a combination of particles having an average particle size in a three different particle ranges such as 75 to 100 micrometers, 20-50 micrometers and under 10 micrometers.

Determine average particle size of thermally conductive filler particles as the volume-weighted median value of particle diameter distribution (Dv50) of the polyorganosiloxane using a Mastersizer^{™} 3000 laser diffraction particle size analyzer from Malvern Instruments.

The thermally conductive filler particles other than platelet boron nitride are present at a concentration of 93 wt% or more, preferably 93.5 wt% or more, 94 wt% or more, 94.5 wt% or more, 95 wt% or more, even 95.5 wt% or more while at the same time are typically present at a concentration of 96.5 wt% or less, even 96 wt% or less, and can be 95.5 wt% or less, or even 95 wt% or less, with wt% relative to curable composition weight.

Thermally conductive filler particles other than aluminum oxide can be present at a concentration of 20 wt% or more, even 25 wt% or more based on the curable composition weight.

Desirably, the thermally conductive filler particles other than platelet boron nitride are selected from a group consisting of spherical aluminum oxide having a Dv50 of 90 micrometers, round aluminum oxide with a Dv50 of 35 micrometers, irregular aluminum oxide with a Dv50 of 2 micrometers, irregular zinc oxide with Dv50 of 0.11-0.13 micrometers, spherical aluminum nitride with a Dv50 of 80 micrometers, and spherical aluminum oxide with a Dv50 of 2 micrometers. The thermally conductive filler particles other than boron nitride is most desirably a combination of filler particles selected from a group consisting of: (i) a combination of 30 to 31 wt% of spherical aluminum oxide having a Dv50 of 90 micrometers, 29.0 to 29.3 wt% of round aluminum oxide with a Dv50 of 35 micrometers, 23.0 to 23.3 wt% Irregular Al₂O₃ with Dv50 of 2 µm, and 12.8 to 13 wt% Irregular ZnO with Dv50 of 0.11-0.13 µm; and (ii) a combination of 16.9 wt% Irregular ZnO with Dv50 of 0.11-0.13 µm, 48.3 to 48.4 wt% Spherical AlN with Dv50 of 80 µm and 30.2 to 30.3 wt% spherical Al₂O₃ with Dv50 of 2 µm; where wt% is relative to weight of the curable composition.

The curable composition further comprises a polyether additive. The polyether additive surprisingly provides enhanced vertical stayability for the curable composition when tested in the Vertical Stayability test described hereinbelow. The polyether additive is any one or any combination or more than one polyether additive selected from those in a group consisting of polyether-based polymers and polyorganosiloxane-polyoxyalkylene copolymers. Polyether-based polymers include polyethylene glycol, polypropylene glycol, polypropylene/polyethylene glycol copolymer. Polyorganosiloxane-polyoxyalkylene copolymers include trimethylsiloxy-terminated dimethylsiloxane-[propylene oxide/ethylene oxide] copolymers such as those having an average chemical structure (III):

(CH₃)₃SiO-[(CH₃)ASiO]m-[(CH₃)₂SiOlₙ-Si(CH₃)₃ (HI)

where:
A is -(CH_{2C}H₂₀)ₚ-(CH_{2C}H(CH₃)O)_{q}-CH₃, where
   subscript p has an average value of 10 or more, preferably 12 or more, and can be 14 or more, 16 or more, even 18 or more while at the same time is 20 or less, and can be 19 or less, 18 or less, 17 or less, 16 or less, 15 or less, 14 or less, 13 or less, 12 or less or even 11 or less; and
   subscript q has an average value of 4 or more, 5 or more 6 or more, 7 or more, 8 or more, 9 or more, 10 or more, 11 or more, 12 or more, 13 or more, 14 or more, 15 or more, 16 or more, 17 or more, even 18 or more while at the same time is 20 or less, and can be 19 or less, 18 or less, 17 or less, 16 or less, 15 or less, 14 or less, 13 or less, 12 or less, 11 or less, 10 or less, 9 or less, 8 or less, 7 or less, 6 or less, or 5 or less;
subscript m has an average value of 4 or more, and can be 5 or more, 6 or more, 7 or more, 8 or more, 9 or more, 10 or more, 11 or more, 12 or more, 13 or more, 14 or more, 15 or more while at the same time is typically 16 or less, or even 1.5 or less, 1.4 or less, 13 or less, 12 or less, 11 or less, 10 or less, 9 or less, 8 or less, 7 or less, 6 or less, or even 5 or less; and
subscript n has an average value of 4 or more, 5 or more, 6 or more, 7 or more, 8 or more, 10 or more, 12 or more, 14 or more 16 or more 18 or more, 20 or more, 24 or more, 26 or more, 30 or more 35 or more, even 40 or more while at the same time is typically 50 or less, 45 or less, 40 or less, 35 or less, 30 or less, 25 or less, 20 or less, 15 or less, or even 10 or less.

Desirably, the curable composition comprises one or more than one trimethylsiloxy-terminated dimethylsiloxane-[propylene oxide/ethylene oxide] copolymer.

The concentration of polyether additives is desirably 0.1 wt% or more, even 0.2 wt% or more, 0.3 wt% or more, 0.4 wt% or more, 0.5 wt% or more, 0.6 wt% or more, 0.7 wt% or more, 0.8 wt% or more, even 0.9 wt% or more while at the same time is typically 1.0 wt% or less, or even 0.9 wt% or less, 0.8 wt% or less, 0.7 wt% or less, 0.6 wt% or less, 0.5 wt% or less, 0.4 wt% or less, 0.3 wt% or less, or even 0.2 wt% or less with wt% based on curable composition weight. When the concentration of the polyether additives is in these ranges it contributes to the vertical stayability of the curable composition.

The curable composition can further comprise, and desirably does further comprise a cure inhibitor. Cure inhibitors can assist in preventing premature curing of the curable composition. Examples of suitable cure inhibitors include any one or any combination of more than one selected from methyl(tris(1,1-dimethyl-2-propynyloxy))silane; methylvinylcyclosiloxane, methyl butynol; 3,5-dimethyl-1-hexyn-3-ol; ethynyl cyclohexanol; and phenyl butynol. The concentration of cure inhibitor is zero wt% or more, 0.01 wt% or more, 0.02 wt% or more, 0.03 wt% or more, 0.04 wt% or more, 0.05 wt% or more, 0.07 wt% or more, 0.1 wt% or more, 0.12 wt% or more, 0.14 wt% or more, 0.16 wt% or more, 0.18 wt% or more, 0.20 wt% or more, 0.25 wt% or more, 0.30 wt% or more, 0.35 wt% or more, 0.40 wt% or more, even 0.45 wt% or more while at the same time is typically 0.5 wt% or less, or even 0.4 wt% or less, 0.3 wt% or less, 0.2 wt% or less, 0.1 wt% or less, or even 0.05 wt% or less, 0.04 wt% or less, or even 0.03 wt% or less, with wt% relative to curable composition weight.

The curable composition can further comprise, and desirably does further comprise, filler treating agent. The filler treating agent is typically a trialkoxy silyl compound, which are compounds that contain a -Si(OR)₃ group, where each R is independently in each occurrence an alkyl group with one carbon or more, 2 carbons or more, 3 carbons or more, 4 carbons or more, even 5 carbons or more while at the same time 6 carbons or fewer, 5 carbons or fewer, 4 carbons or fewer, 3 carbons or fewer, or even 2 carbons or fewer. Desirably, each R group is methyl. Desirably, the filler treating agent is one or any combination of more than one component selected from a group consisting of alkyltrialkoxysilanes and monotrialkoxysiloxy-terminated diorganopolysiloxanes.

Suitable alkyltrialkoxysilanes include those having the chemical formula Rₐ(R_{b}O)₃Si where each of Rₐ and R_{b} is independently in each occurrence an alkyl having 1 or more, 2 or more, 3 or more, 4 or more, 5 or more, 6 or more, 7 or more, 8 or more, 9 or more, 10 or more even 11 or more carbon atoms while at the same time typically contains 20 or fewer, 18 or fewer, 16 or fewer, 14 or fewer, 12 or fewer, and can contain 10 or fewer carbon atoms. R_{b} is desirably methyl so as to form methoxyl groups attached to the silicon atom. A particularly desirably alkyltrialkoxysilane is n-decyltrimethoxysilane.

Suitable monotrialkoxysiloxy-terminated diorganopolysiloxanes include those having the average chemical formula R^{c}₃SiO[R^{d}₂SiO]_{g}SiOR^{e}₃ where each R^{c}, R^{d} and R^{e} is independently in each occurrence selected from hydrocarbyls having one or more, and can have 2 or more, 3 or more, 4 or more, 5 or more, 6 or more, 7 or more, even 8 or more carbon atoms while at the same time typically contain 10 or fewer, 8 or fewer, 6 or fewer, 4 or fewer, even 2 or fewer carbon atoms and subscript g typically has a value of 20 or more, 30 or more, 40 or more, 50 or more, 60 or more, 70 or more, 80 or more, 90 or more, 100 or more, even 110 or more while at the same time typically has a value of 200 of less, 150 or less, 125 or less, 120 or less, or even 110 or less. A particularly desirable monotrialkoxysiloxy-terminated diorganopolysiloxane has the average chemical formula (CH₃)₃SiO[(CH₃)₂SiO]₁₁₀Si(OCH₃)₃.

For example, the curable composition can comprise any one or any combination of n-decyltrimethoxysilane and (CH₃)₃SiO[(CH₃)₂SiO]₁₁₀Si(OCH₃)₃.

The concentration of filler treating agent is zero wt% or more, 0.10 wt% or more, 0.20 wt% of more, 0.30 wt% or more, 0.40 wt% or more, 0.50 wt% or more, 0.60 wt% or more, 0.70 wt% or more, 0.80 wt% or more. 0.90 wt% or more, 1.00 wt% or more, 1.25 wt% or more, 1.50 wt% or more, 1.60 wt% or more while at the same time is typically present at a concentration of 5.0 wt% or less, and can be 4.0 wt% or less, 3.0 wt% or less, 2.0 wt% or less, 1.75 wt% or less, 1.70 wt% or less, even 1.65 wt% or less, with wt% relative to curable composition weight.

The curable composition can further comprise or be free of any one or any combination of more than one additional additive such as silica, fumed silica, pigments, carbon black, anti-oxidant, and glass beads. For example, the curable composition can comprise fumed silica at a concentration of zero wt% or more, or even 0.01 wt% or more, 0.02 wt% or more, 0.03 wt% or more, 0.04 wt% or more, even 0.05 wt% or more while at the same time typically 0.20 wt% or less, 0.15 wt% or less, 0.10 wt% or less, 0.08 wt% or less, 0.06 wt% or less, with wt% relative to curable composition weight. Additionally, or alternatively, the composition can comprise a pigment such as copper phthalocyanine powder at a concentration of 0.05 wt% or more, 0.08 wt% or more, 0.10 wt% or more, even 0.12 wt% or more while at the same time typically 0.5 wt% or less, 0.4 wt% or less, 0.3 wt% or less, 0.2 wt% or less, or even 0.15 wt% or less, with wt% relative to curable composition weight.

The curable composition of the present invention is useful as a thermal interface material that can be applied between components and cured in place between the components. In that regard, the present invention can also be a process for using the curable composition, the process comprising applying the composition between and in contact with two or more components and then heating the curable composition to a temperature above the Tg of the thermoplastic polymer encapsulating the platinum catalyst to cure the curable composition while in place between the components. The curable composition is particularly valuable as a thermal interface material in gaps of one millimeter or more between components because it cures to a cured composition that is free of cracking even in gaps of one millimeter. Hence, the process of the present invention can include applying the curable composition to a thickness of one millimeter or more where the thickness corresponds to the dimension of the composition extending between the two components (that is, the width of the gap between the components).

### Examples

Table 1 lists the components for use in preparing the Examples (Exs) and Comparative Examples (Comp Exs) described below. The components are identified in Table 1 with the following abbreviations: vinyl-functional silicone polymer ("V-P"), silyl-hydride functional polysiloxane ("XL"), platinum-based hydrosilylation catalyst ("Pt Catalyst"), platelet boron nitride particles ("BN particles"), thermally conductive filler ("TC Filler"), polyether additive ("PE Additive"), filler treating agent ("TA"), and "Vi" is a vinyl (-CH=CH₂) group. PolarTherm is a trademark of Momentive Performance Materials Quartz, Inc. Alunabeads is a trademark of Showa Denko Company. Aerosil is a trademark of Evonik Operations GMBH. DOWFAX is a trademark of The Dow Chemical Company.

**Table 1**

| Component | Description | Source |
|---|---|---|
| V-P1 | Vinyl dimethyl terminated polydimethylsiloxane with 1.25 wt% vinyl and nominal viscosity of 78 milliPascal*seconds (mPa*s) and average chemical structure: Vi(CH₃)₂Si-O-[Si(CH₃)₂-O]₇₅-Si(CH₃)₂Vi | Available under the name DMS-V21 from Gelest. |
| V-P2 | Vinyl dimethyl terminated polydimethylsiloxane with nominal viscosity of 2000 mPa*s and 0.24 wt% vinyl with an average chemical structure: | Commercially available as DMS-V31 from Gelest |
| | Vi(CH₃)₂Si-O-[Si(CH₃)₂-O]₃₈₀-Si(CH₃)₂Vi | |
| V-P3 | Vinyl dimethyl terminated polydimethylsiloxane with nominal viscosity of 60 mPa*s and 1.35 wt% vinyl and average chemical structure: Vi(CH₃)₂SiO-((CH₃)₂SiO)₄₅-Si(CH₃)₂Vi. CAS number 68083-19-2 and number average degree of polymerization is 45 | Prepare by ring-opening polymerization of cyclosiloxanes with vinyl end-blockers as described in US5883215A. |
| XL1 | Trimethyl terminated dimethyl-co-hydrogen methyl polysiloxane with nominal viscosity of 19 mPa*s and 0.11 mole-percent SiH. Average chemical: (CH₃)₃SiO-[Si(CH₃)₂O]₂₅-[Si(CH₃)HO]₂Si(CH₃)₃ | Commercially available as HMS-071 from Gelest. |
| Pt Catalyst 1 | platinum-divinyltetramethyldisiloxane complex (CAS 68478-92-2); 1.0% weight-part in vinyl terminated PDMS | Available form Gelest |
| Pt Catalyst 2 | A mixture containing 40 percent by weight of a complex of platinum with 1,3-divinyl-1,1,3,3-tetramethyldisiloxane dispersed in a thermoplastic polymethyl methylmethacrylate-co-butyl acrylate copolymer with a glass transition temperature as measured by DSC of 64°C; 55 percent by weight of a dimethylvinylsiloxy-terminated polydimethylsiloxane having a viscosity of 2 Pa-s at 25 °C and a vinyl content of 0.2 percent by weight; and 5 percent by weight of a hexamethyldisilazane-treated fumed silica. The catalyst has a platinum content of 0.16 percent by weight. | Prepare as taught in JP06531238B2 and WO2018079215 |
| BN particles | Platelet shaped Boron Nitride filler, with average particle size along the platelet of ~ 45 micrometers (µm), platelet thickness between 5-10 µm | Commercially available under the name PolarTherm^{™} PT110 from Momentive Performance Materials |
| TC Filler 1 | Spherical Al₂O₃ with Dv50 of 90 micrometers (µm) | Available under the name DAW-90 from Denka Company Limited in Japan. |
| TC Filler 2 | Round Al₂O₃ with Dv50 of 35 µm | Available under the name A-SF-60 from Chialco. |
| TC Filler 3 | Irregular Al₂O₃ with Dv50 of 2 µm | Available under the name AZ2-75 from Nippon Steel & Sumikin Materials Co. Ltd., |
| TC Filler 4 | Irregular ZnO with Dv50 of 0.11-0.13 µm | Commercially available as Zoco 102 from Zochem. |
| TC Filler 5 | Spherical AlN with Dv50 of 80 µm | Commercially available as ANF S-80 ST204 from Maruwa Ceramic Co. Ltd. of Japan |
| TC Filler 6 | spherical Al₂O₃ with Dv50 of 2 µm | Available under the name ALUNABEADS^{™} CB-P02 from Showa Denko Company |
| Additional Additive 1 | Hydrophobic fumed silica with a specific surface (BET) in arrange of 175-225 square meters per gram. | Available under the name AEROSIL^{™} 200V from Evonik |
| PE Additive 1 | Trimethylsiloxy-terminated dimethylsiloxane-[60% propylene oxide/40% ethylene oxide)] block copolymer viscosity of 1,800cSt and weight percent non-silicone of 69% with an average chemical structure: | Prepare as described in US8008407B2 |
| | 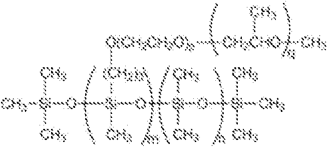 | |
| | where n=10, m=14, p=18, and q=18. | |
| PE Additive 2 | Polyalkoxylate comprising ethylene oxide/propylene oxide bock copolymer, alcohol alkoxylate (propylene oxide= 94 wt%) initiated by sorbitol. The copolymer has MW of 13500g/mol, viscosity of 13,400cP at 25C, with OH content of 30-36 mg KOH/g), OH represents hydroxyl value of the alcohol alkoxylate determined by ASTM D4274-2011. | Available as DOWFAX^{™} DF-162 Nonionic Surfactant from The Dow Chemical Company. |
| PE Additive 3 | Trimethylsiloxy-terminated Dimethyl, Methyl(propyl(poly(EQ)(PO)) Siloxane copolymer with viscosity of 580 square millimeters per second (centistokes) and weight percent non-silicone of 50.6% having the following average chemical structure: | Prepare as described in US8008407B2. |
| | 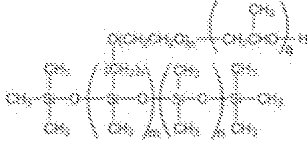 | |
| | where n=43, m=6, p=10, and q=4. | |
| PE Additive 4 | Polypropylene glycol with number average molecular weight of 4000 and structure below with viscosity of 450cSt. | Available as Polyglycol P-4000 from The Dow Chemical Company. |
| TA1 | n-decyltrimethoxysilane | Available under the name SID2670.0 from Gelest. |
| TA2 | Polysiloxane having an average molecular structure: (CH₃)₃SiO[(CH₃)₂SiO]₁₁₀Si(OCH₃)₃ | Synthesize according to teachings in US2006/0100336. |
| Cure Inhibitor 1 | Methyl(tris(1,1-dimethyl-2-propynyloxy))silane | Commercially available from Alfa Chemistry. |
| Pigment | Copper Phthalocyanine Powder (CuPc) CAS 147-14-8 (40% by weight) dispersed by 3-roll mill in Trimethyl terminated polydimethylsiloxane 350Cst (200Fluid) (60% by weight). | CuPc available as Catalogue no 43650-09 from Alfa-Aesar. Polydimethylsiloxane available from The Dow Chemical Company as DOWSIL^{™} 200 Fluid 350cSt. |

### Sample Preparation

Prepare the Exs and Comp Exs as follows using a 4-liter Sigma-blade kneader mixer with the formulation components listed in Table 2 (Comparative Examples) and Table 3 (Examples), which list the components in wt% relative to curable composition weight.

Load the specified amount of V-P, TA and pigment components into the mixer and mix for 5 minutes at 20 revolutions per minute (RPM) under nitrogen flow at 0.4 cubic meters per hour. Add Additional Filler 1 and TC Filler 4 while mixing and continue mixing for 10 minutes (min) at 45 RPM under nitrogen purge. Add TC Filler 3 and mix for 10 min at 45 RPM under nitrogen purge. Stop mixing and scrape material down from the walls of the mixing container and cover. Add the TC Filler 2 and mix for 10 min at 30 RPM under nitrogen purge. Add the TC Filler 1 and mix for 10 min at 30 RPM under nitrogen purge. Stop mixing and scrape material down from the walls of the mixing container. Continue mixing at 30 RPM under vacuum and heat to 130 °C for 40 min. Cool to 40 °C, stop mixing and release vacuum. Scrape material down from the container wall and mixer blade. Add Cure Inhibitor 1, XL1, and PE Additives and mix for 15 min at 30 RPM under nitrogen purge then for 15 min. Cool to 25 °C, add BN particles and Pt Catalyst components into mixer, mix for 45 min at 30 RPM under nitrogen purge. Continue mixing for 20 min at 30 RPM with full vacuum. Stop mixing and release the vacuum to obtain the thermal composition for the corresponding Comp Ex or Ex.

### Sample Characterization

Characterize the Comp Exs and Exs with respect to 25 °C Storability, Extrudability, Vertical Stayability (1.5 mm thickness), Crack Formation (1.0 mm thickness), Thermal Conductivity and Disassembly Force using the following test procedures. Results are in Tables 4 (Comp Exs) and 5 (Exs). Results report values and whether the sample passes (P) or fails (F) the characterization test.

***25°C Storability** Test.* Place approximately 120 grams of sample material into a 30 milliliter EFT syringe. Close the syringe and store at 25 °C for 6 months. After 6 months test the extrudability of the sample in the Extrusion Test. If the extrusion rate is less than 5 grams per minute (g/min) then the sample fails the 25 °C Storability Test.

*Extrusion Test.* Fill a 30 milliliter EFD plastic cartridge with no tip with a sample composition. Dispense the sample composition under 621 kiloPascal (90 pounds per square inch) pressure and record the mass of sample composition that is extruded in one minute. Repeat the test five times and take the average amount extruded in one minute to obtain the extrusion rate of the sample composition in grams/minute (g/min). A sample passes if it achieve at least 15 g/min extrusion rate.

*Thermal Conductivity.* Determine thermal conductivity of a sample according to ASTM-5470 using Lon Gwin Model LW 9389 TIM Thermal Resistance and Conductivity Measurement Apparatus. Testing time is 15 minutes per sample and temperature is 80 °C. A thermal conductivity of at least 6 Watts per meter*Kelvin passes.

*Vertical Stayability Test (and Crack Formation evaluation).* Use a 1.5 mm variation of this test to determine Vertical Stayability and a 1.0 mm variation of this test to determine if it has crack free performance in a 1.0 mm gap.

For Vertical Stayability, dispense 0.9 milliliter (mL) of sample onto the middle of the surface of an aluminum plate. Please 1.5 mm thick spacers on either side of the sample and then apply a transparent glass plate on top of the sample to squeeze the sample to a thickness of 1.5 mm and clamp the aluminum plate to the glass plate. Draw an outline of the sample on the glass plate to mark its original position. Orient the assembly so that the plates and space between them is vertically oriented to Earth's gravity with the 1.5 mm spacers on either side of the sample and there is free space above and below the sample. Cycle the assembly from -10 °C to 90 °C in a program that maintains -10 °C for 30 minutes, then heats to 90 °C in 30 minutes, maintains 90 °C for 30 minutes, and then ramps down to -10 °C in 30 minutes. Repeat this cycle for 1000 hours. At the end, observe the location of the sample material between the plates. If the sample drops more than 10% in position then it fails the test.

Repeat the test using 0.6 mL of sample and 1.0 mm thick spacers to evaluate for cracking. Observe after 1000 hours of thermal cycling to determine if there are visible cracks in the sample. The sample passes if it is free of visible cracks.

*Disassembly Force Test.* Determine disassembly force for a sample by applying sample to a depth of greater than 1 millimeter (mm) to the center of a piece of nickel plate 25 mm wide by 75 mm long. Place 1 mm thick spacers on either side of the sample and press an aluminum plate 25 mm wide by 75 mm long over the sample oriented orthogonally to the nickel plate. Press the aluminum plate towards the nickel plate to compress the sample between the two plates to a thickness of 1 mm thick and 25 mm square. Heat the plates and sample to 100 °C for 24 hours and then allow to cool to 25 °C. Measure the force needed to separate the plates by pulling time apart in a direction perpendicular to the plates and directly above the adhered section of the plates as a rate of 50.8 millimeters per minute using a texture analyzer (TA XT plus from Lotun Science Company, Ltd) using a P1 probe. The maximum amount of force needed to separate the metal plates corresponds to the disassembly force for the sample. A disassembly force of 0.15 megaPascals (Mpa) or less is required to pass the Disassembly Force Test.

**Table 2 - Comp Exs**

| **Component** | **Comparative Example** | | | | | | | | | | | | |
|---|---|---|---|---|---|---|---|---|---|---|---|---|---|
| | **A** | **B** | **C** | **^{.}D** | **E** | **F** | **G** | **H** | **I** | **J** | **K** | **L** | **M** |
| V-P1 | 1.91 | 1.65 | 2.10 | 1.84 | 1.84 | 1.88 | 1.61 | 1.61 | 2.07 | 1.20 | 1.20 | 1.20 | 1.20 |
| V-P2 | 0.13 | 0.13 | 0.13 | 0.13 | 0.13 | 0.13 | 0.13 | 0.13 | 0.13 | 0.13 | 0.13 | 0.13 | 0.13 |
| Additional Additive 1 | 0.05 | 0.05 | 0.05 | 0.05 | 0.05 | 0.05 | 0.05 | 0.05 | 0.05 | 0.05 | 0.05 | 0.05 | 0.05 |
| TC Filler 1 | 30.45 | 30.45 | 30.22 | 30.22 | 30.22 | 30.45 | 30.45 | 30.45 | 30.22 | 30.22 | 30.22 | 30.22 | 30.22 |
| TC Filler 2 | 29.22 | 29.22 | 29.00 | 29.00 | 29.00 | 29.22 | 29.22 | 29.22 | 29.00 | 29.00 | 29.00 | 29.00 | 29.00 |
| TC Filler 3 | 23.26 | 23.26 | 23.08 | 23.08 | 23.08 | 23.26 | 23.26 | 23.26 | 23.08 | 23.08 | 23.08 | 23.08 | 23.08 |
| TC Filler 4 | 12.94 | 12.94 | 12.85 | 12.85 | 12.85 | 12.94 | 12.94 | 12.94 | 12.85 | 12.85 | 12.85 | 12.85 | 12.85 |
| BN Particles | 0.00 | 0.00 | 0.50 | 0.50 | 0.50 | 0.00 | 0.00 | 0.00 | 0.50 | 0.50 | 0.50 | 0.50 | 0.50 |
| TA1 | 0.10 | 0.10 | 0.10 | 0.10 | 0.10 | 0.10 | 0.10 | 0.10 | 0.10 | 0.10 | 0.10 | 0.10 | 0.10 |
| TA2 | 1.52 | 1.52 | 1.52 | 1.52 | 1.52 | 1.52 | 1.52 | 1.52 | 1.52 | 1.52 | 1.52 | 1.52 | 1.52 |
| Pigment | 0.12 | 0.12 | 0.12 | 0.12 | 0.12 | 0.12 | 0.12 | 0.12 | 0.12 | 0.12 | 0.12 | 0.12 | 0.12 |
| Cure Inhibitor 1 | 0.00 | 0.00 | 0.00 | 0.00 | 0.00 | 0.025 | 0.025 | 0.025 | 0.05 | 0.03 | 0.03 | 0.03 | 0.03 |
| PE Additive 1 | 0.00 | 0.30 | 0.00 | 0.30 | 0.00 | 0.00 | 0.30 | 0.00 | 0.00 | 1.00 | 0.00 | 0.00 | 0.00 |
| PE Additive 2 | 0.00 | 0.00 | 0.00 | 0.00 | 0.30 | 0.00 | 0.00 | 0.30 | 0.00 | 0.00 | 1.00 | 0.00 | 0.00 |
| PE Additive 3 | 0.00 | 0.00 | 0.00 | 0.00 | 0.00 | 0.00 | 0.00 | 0.00 | 0.00 | 0.00 | 0.00 | 1.00 | 0.00 |
| PE Additive 4 | 0.00 | 0.00 | 0.00 | 0.00 | 0.00 | 0.00 | 0.00 | 0.00 | 0.00 | 0.00 | 0.00 | 0.00 | 1.00 |
| XL1 | 0.28 | 0.24 | 0.31 | 0.27 | 0.27 | 0.27 | 0.24 | 0.24 | 0.31 | 0.18 | 0.18 | 0.18 | 0.18 |
| Pt Catalyst 1 | 0.02 | 0.02 | 0.02 | 0.02 | 0.02 | 0.00 | 0.00 | 0.00 | 0.00 | 0.00 | 0.00 | 0.00 | 0.00 |
| Pt Catalyst 2 | 0.00 | 0.00 | 0.00 | 0.00 | 0.00 | 0.03 | 0.03 | 0.03 | 0.03 | 0.03 | 0.03 | 0.03 | 0.03 |

**Table 3 - Examples**

| | **Example** | | | | | | | | | | | | | | | | | |
|---|---|---|---|---|---|---|---|---|---|---|---|---|---|---|---|---|---|---|
| | **1** | **2** | **3** | **4** | **5** | **6** | **7** | **8** | **9** | **10** | **11** | **12** | **13** | **14** | **15** | **16** | **17** | **18** |
| V-P1 | 1.98 | 1.81 | 1.54 | 1.68 | 2.14 | 1.84 | 1.98 | 1.81 | 1.64 | 1.48 | 1.98 | 1.81 | 1.64 | 1.98 | 1.81 | 1.64 | 0.00 | 0.00 |
| V-P2 | 0.13 | 0.13 | 0.13 | 0.13 | 0.13 | 0.13 | 0.13 | 0.13 | 0.13 | 0.13 | 0.13 | 0.13 | 0.13 | 0.13 | 0.13 | 0.13 | 0.13 | 0.13 |
| V-P3 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 1.37 | 1.37 |
| Additional Additive 1 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| TC Filler 1 | 30.22 | 30.22 | 30.22 | 30.22 | 29.29 | 29.80 | 30.22 | 30.22 | 30.22 | 30.22 | 30.22 | 30.22 | 30.22 | 30.22 | 30.22 | 30.22 | 0.00 | 0.00 |
| TC Filler 2 | 29.00 | 29.00 | 29.00 | 29.00 | 28.71 | 28.65 | 29.00 | 29.00 | 29.00 | 29.00 | 29.00 | 29.00 | 29.00 | 29.00 | 29.00 | 29.00 | 0.00 | 0.00 |
| TC Filler 3 | 23.08 | 23.08 | 23.08 | 23.08 | 22.68 | 22.52 | 23.08 | 23.08 | 23.08 | 23.08 | 23.08 | 23.08 | 23.08 | 23.08 | 23.08 | 23.08 | 0.00 | 0.00 |
| TC Filler 4 | 12.85 | 12.85 | 12.85 | 12.85 | 12.65 | 12.52 | 12.85 | 12.85 | 12.85 | 12.85 | 12.85 | 12.85 | 12.85 | 12.85 | 12.85 | 12.85 | 16.92 | 16.92 |
| BN Particles | 0.50 | 0.50 | 0.50 | 0.50 | 1.50 | 2.31 | 0.50 | 0.50 | 0.50 | 0.50 | 0.50 | 0.50 | 0.50 | 0.50 | 0.50 | 0.50 | 0.32 | 0.32 |
| TC Filler 5 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 48.39 | 48.39 |
| TC Filler 6 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 30.27 | 30.27 |
| TA1 | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 | 0.08 | 0.08 |
| TA2 | 1.52 | 1.52 | 1.52 | 1.52 | 1.52 | 1.52 | 1.52 | 1.52 | 1.52 | 1.52 | 1.52 | 1.52 | 1.52 | 1.52 | 1.52 | 1.52 | 1.95 | 1.95 |
| Pigment | 0.12 | 0.12 | 0.12 | 0.12 | 0.12 | 0.12 | 0.12 | 0.12 | 0.12 | 0.12 | 0.12 | 0.12 | 0.12 | 0.12 | 0.12 | 0.12 | 0.05 | 0.05 |
| Cure Inhibitor 1 | 0.03 | 0.03 | 0.03 | 0.03 | 0.03 | 0.03 | 0.03 | 0.03 | 0.03 | 0.03 | 0.03 | 0.03 | 0.03 | 0.03 | 0.03 | 0.03 | 0.01 | 0.01 |
| PE Additive 1 | 0.10 | 0.30 | 0.60 | 0.10 | 0.10 | 0.10 | 0.00 | 0.00 | 0.00 | 0.00 | 0.00 | 0.00 | 0.00 | 0.00 | 0.00 | 0.00 | 0.00 | 0.00 |
| PE Additive 2 | 0.00 | 0.00 | 0.00 | 0.00 | 0.00 | 0.00 | 0.10 | 0.30 | 0.50 | 0.30 | 0.00 | 0.00 | 0.00 | 0.00 | 0.00 | 0.00 | 0.15 | 0.00 |
| **PE** Additive 3 | 0.00 | 0.00 | 0.00 | 0.00 | 0.00 | 0.00 | 0.00 | 0.00 | 0.00 | 0.00 | 0.10 | 0.30 | 0.50 | 0.00 | 0.00 | 0.00 | 0.00 | 0.00 |
| PE Additive 4 | 0.00 | 0.00 | 0.00 | 0.00 | 0.00 | 0.00 | 0.00 | 0.00 | 0.00 | 0.00 | 0.00 | 0.00 | 0.00 | 0.10 | 0.30 | 0.50 | 0.00 | 0.15 |
| XL1 | 0.30 | 0.27 | 0.24 | 0.60 | 0.33 | 0.28 | 0.30 | 0.27 | 0.24 | 0.6 | 0.30 | 0.27 | 0.24 | 0.30 | 0.27 | 0.24 | 0.28 | 0.28 |
| Pt Catalyst 2 | 0.03 | 0.03 | 0.03 | 0.03 | 0.03 | 0.03 | 0.03 | 0.03 | 0.03 | 0.03 | 0.03 | 0.03 | 0.03 | 0.03 | 0.03 | 0.03 | 0.02 | 0.02 |
| ppm catalyst Pt | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.3 | 0.3 |

**Table 4 - Results for Comp Exs**

| **Characterization** | **Comparative Example** | | | | | | | | | | | | |
|---|---|---|---|---|---|---|---|---|---|---|---|---|---|
| | **A** | **B** | **C** | **D** | **E** | **F** | **G** | **H** | **I** | **J** | **K** | **L** | **M** |
| 25 °C Storability (P/F) | Fail | Fail | Fail | Fail | Fail | Pass | Pass | Pass | Pass | Fail | Fail | Fail | Fail |
| Extrusion Test (g/min) (P/F) | 8.4 (F) | 6.1 (F) | 9.7 (F) | 7.2 (F) | 7.5 (F) | 19 (P) | 13 (F) | 15 (P) | 30 (P) | 15 (P) | 16 (P) | 21 (P) | 20 (P) |
| Vertical Stayability (% drop) (P/F) | 100 (F) | 100 (F) | 100 (F) | 100 (F) | 100 (F) | 70 (F) | **40** (F) | **40** (F) | 50 (F) | 0 (P) | 0 (P) | 0 (P) | 10 (P) |
| Crack Formation (P/F) | Fail | Fail | Fail | Fail | Fail | Pass | Pass | Pass | Pass | Fail | Fail | Fail | Fail |
| Disassembly Force (MPa)(P/F) | 0.0 7 (P) | 0.0 7 (P) | 0.0 7 (P) | 0.0 8 (P) | 0.0 8 (P) | 0.12 1 (P) | 0.09 (P) | 0.09 (P) | 0.10 (P) | 0.0 7 (P) | 0.0 7 (P) | 0.0 9 (P) | 0.08 (P) |
| Thermal Conductivity (W/m*K)(P/F) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) |
| OVERALL | **Fail** | **Fail** | **Fail** | **Fail** | Fail | **Fail** | **Fail** | **Fail** | **Fail** | **Fall** | **Fail** | **Fail** | **Fail** |

**Table 5 - Results for Exs**

| **Characterization** | **Example** | | | | | | | | | | | | | | | | | |
|---|---|---|---|---|---|---|---|---|---|---|---|---|---|---|---|---|---|---|
| | **1** | **2** | **3** | **4** | **5** | **6** | **7** | **8** | **9** | **10** | **11** | **12** | **13** | **14** | **15** | **16** | **17** | **18** |
| 25 °C Storability (P/F) | Pass | Pass | Pass | Pass | Pass | Pass | Pass | Pass | Pass | Pass | Pass | Pass | Pass | Pass | Pass | Pass | Pass | Pass |
| Extrusion Test (g/min) (P/F) | 25 (P) | 22 (P) | 20 (P) | 30 (P) | 26 (P) | 15 (P) | 24 (P) | 24 (P) | 21 (P) | 28 (P) | 27 (P) | 25 (P) | 24 (P) | 27 (P) | 26 (P) | 22 (P) | 19 (P) | 19 (P) |
| Vertical Stayability (% drop) (P/F) | 0 (P) | 0 (P) | 0 (P) | 0 (P) | 0 (P) | 0 (P) | 0 (P) | 0 (P) | 0 (P) | 0 (P) | 5 (P) | 0 (P) | 0 (P) | 0 (P) | 0 (P) | 0 (P) | 0 (P) | 5 (P) |
| Crack Formation (P/F) | Pass | Pass | Pass | Pass | Pass | Pass | Pass | Pass | Pass | Pass | Pass | Pass | Pass | Pass | Pass | Pass | Pass | Pass |
| Disassembly Force (MPa)(P/F) | 0.09 (P) | 0.08 (P) | 0.08 (P) | 0.09 (P) | 0.09 (P) | 0.07 (P) | 0.08 (P) | 0.08 (P) | 0.08 (P) | 0.09 (P) | 0.09 (P) | 0.09 (P) | 0.08 (P) | 0.07 (P) | 0.08 (P) | 0.08 (P) | 0.01 (P) | 0.01 (P) |
| Thermal Conductivity (W/m*K)(P/F) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) | 6.2 (P) | 6.9 (P) | 9.6 (P) | 9.6 (P) |
| **OVERALL** | **Pass** | **Pass** | **Pass** | **Pass** | **Pass** | **Pass** | **Pass** | **Pass** | **Pass** | **Pass** | **Pass** | **Pass** | **Pass** | **Pass** | **Pass** | **Pass** | **Pass** | **Pass** |

Results in Table 5 illustrate that compositions of the present invention solve all the problems set forth: a 1-part curable composition that has storage stability at 25 degrees Celsius (°C) for at least 6 months as determined by the 25°C Storability Test, has a thermal conductivity of 6 Watts per meter*Kelvin (W/m*K) or more as determined by ASTM-5470 using a LONGWIN instrument, is highly extrudable as demonstrated by demonstrating greater than 15 grams per minute (g/min) extrusion rate in the Extrusion Test, demonstrates crack free performance in a gap of 1.0 millimeters and excellent vertical stayability as demonstrated by an absence of sliding or cracking in the Vertical Stayability test, and has a disassembly force of less than 0.15 megaPascals in the Disassembly Force test.

In contrast, Table 4 illustrates that compositions that deviate from one or more requirement of the composition of the present invention do not solve all of these problems.

## Claims

1. A curable composition comprising:
(a) 1.6 to 2.5 weight-percent of a vinyl-functional silicone polymer having two or more vinyl groups per molecule;
(b) at least one silyl-hydride functional polysiloxane crosslinker that contains at least two silyl-hydride group per molecule and that is present at a concentration to provide a molar ratio of silyl-hydride to vinyl for the composition that is in a range of 0.3 to 1.0;
(c) a platinum-based hydrosilylation catalyst encapsulated in a thermoplastic polymer, where the thermoplastic polymer has a glass transition temperature in a range of 60 to 80 degrees Celsius as determined by ASTM D7426 over a range of -60 to 200 °C at a ramp rate of 10 °C per minute;
(d) 93.5 to 96 weight-percent of thermally conductive filler particles other than platelet boron nitride particles;
(e) 0.2 to 2.5 weight-percent of platelet boron nitride particles;
(f) 0.1 to 1.0 weight-percent of a polyether additive selected from one or any combination of more than one of a group consisting of polyether-based polymers and polyorganosiloxane-polyoxyalkylene copolymers;
(g) 0.10 to 5.0 weight-percent of a filler treating agent; and
(h) zero to 0.5 weight-percent of a cure inhibitor;
with weight-percent relative to curable composition weight.

2. The composition of Claim 1, wherein the vinyl-functional silicone polymer has an average chemical structure (I):
RₓVi₍₃₋ₓ₎SiO-(R₂SiO)_{d}-SiR_{y}Vi_{(3-y)} (I)
where: R is independently in each occurrence selected from alkyl and aryl groups having from one to 6 carbon atoms; Vi is a vinyl group, x and y indicate the average number of terminal R groups on either end and are each independently in each occurrence selected from a value in a range of zero to 2, and d is the average number of (R₂SiO) groups and has a value of 30 or more and at the same time 500 or less.

3. The composition of any one previous claim, wherein the silyl-hydride functional polysiloxane crosslinker has an average chemical structure (II):
R₍₃₋ₕ₎HₕSiO-(HRSiO)ₐ-(R₂SiO)_{b}-SiHₕ^{,}R_{(3-h')} (II)
where: R is independently in each occurrence selected from alkyl and aryl groups having from one to 6 carbon atoms, H is a hydrogen atom, h and h' refer the average number of terminal hydrogen atoms on either end and each are independently in each occurrence selected from a value in a range of zero to 3, subscript a is the average number of (HRSiO) groups per molecule and has a value in a range of zero to 10, wherein h, h' and a are selected such that the sum of h, h' and a is 2 or more, subscript b is the average number of (R₂SiO) groups per molecule and has a value in a range of 5 to 200.

4. The composition of any one previous claim, wherein the polyether additive is selected from one or any combination of more than one from a group consisting of polypropylene glycol, polypropylene/polyethylene glycol copolymer, and trimethylsiloxy-terminated dimethlysiloxane-[propylene oxide/ethylene oxide] copolymers.

5. The composition of Claim 4, wherein the trimethylsiloxy-terminated dimethylsiloxane-[propylene oxide/ethylene oxide] copolymers are selected from those having an average chemical structure (III):
(CH₃)₃SiO-[(CH₃)ASiO]ₘ-[(CH₃)₂SiO)ₙ-Si(CH₃)₃ (III)
where A is -{CH₂CH₂O)ₚ-(CH₂CH(CH₃)O)_{q}-CH₃, p has an average value of 10-20, q has an average value of 4 to 20, m has an average value of 4 to 16, and n has an average value of 4 to 50.

6. The composition of any one previous claim, wherein the composition thermally conductive filler particles other than platelet boron nitride are selected from a group consisting of spherical aluminum oxide having a Dv50 of 90 micrometers, round aluminum oxide with a Dv50 of 35 micrometers, irregular aluminum oxide with a Dv50 of 2 micrometers, irregular zinc oxide with Dv50 of 0.11-0.13 micrometers, spherical aluminum nitride with a Dv50 of 80 micrometers, and spherical aluminum oxide with a Dv50 of 2 micrometers. wherein the particle size Dv50 is determined using a laser diffraction particle size analyser.

7. The composition of any one previous claim, wherein the filler treating agent is any one or any combination of more than one component selected from a group consisting of alkyltrialkoxysilanes and monotrialkoxysiloxy-terminated diorganopolysiloxanes.

8. The composition of any one previous claim, wherein the composition further comprises any one or any combination of more than one additional additive selected from a group consisting of fumed silica and pigments.

9. A process for using the composition of Claim 1, the process comprising applying the composition between and in contact with two components and then heating the curable composition to a temperature above the glass transition temperature of the thermoplastic polymer encapsulating the platinum catalyst to cure the curable composition while in place between the components.

10. The process of Claim 9, where the thickness of the composition of Claim 1 is one millimeter or more, where thickness is the dimension of the composition extending between the two components.

## Patentansprüche

1. Härtbare Zusammensetzung, umfassend:
(a) zu 1,6 bis 2,5 Gewichtsprozent ein Silikonpolymer mit Vinylfunktionalität, das zwei oder mehrere Vinylgruppen pro Molekül aufweist;
(b) mindestens einen Polysiloxanvernetzer mit Silylhydridfunktionalität, der mindestens zwei Silylhydridgruppen pro Molekül enthält und der in einer Konzentration vorhanden ist, um ein Molverhältnis von Silylhydrid zu Vinyl für die Zusammensetzung bereitzustellen, das in einem Bereich von 0,3 bis 1,0 liegt;
(c) einen platinbasierten Hydrosilylierungskatalysator, eingekapselt in ein thermoplastisches Polymer, wobei das thermoplastische Polymer eine Glasübergangstemperatur in einem Bereich von 60 bis 80 Grad Celsius aufweist, bestimmt nach ASTM D7426 über einen Bereich von -60 bis 200 °C bei einer Heizrate von 10 °C pro Minute;
(d) zu 93,5 bis 96 Gewichtsprozent wärmeleitfähige Füllstoffteilchen, bei denen es sich nicht um plättchenförmige Bornitridteilchen handelt;
(e) zu 0,2 bis 2,5 Gewichtsprozent plättchenförmige Bomitridteilchen;
(f) zu 0,1 bis 1,0 Gewichtsprozent ein Polyetheradditiv, ausgewählt aus einem oder einer beliebigen Kombination von mehr als einem aus einer Gruppe, bestehend aus polyetherbasierten Polymeren und Polyorganosiloxan-Polyoxyalkylen-Copolymeren;
(g) zu 0,10 bis 5,0 Gewichtsprozent ein Füllstoffbehandlungsmittel; und
(h) zu null bis 0,5 Gewichtsprozent einen Härtungshemmer;
wobei sich die Gewichtsprozent auf das Gewicht der härtbaren Zusammensetzung beziehen.

2. Zusammensetzung nach Anspruch 1, wobei das Silikonpolymer mit Vinylfunktionalität eine durchschnittliche chemische Struktur (I) aufweist:
RₓVi₍₃₋ₓ₎SiO-(R₂SiO)_{d}-SiR_{y}Vi_{(3-y}) (I)
wobei: R bei jedem Auftreten unabhängig ausgewählt ist aus Alkyl- und Arylgruppen, die ein bis 6 Kohlenstoffatome aufweisen; Vi eine Vinylgruppe ist, x und y die durchschnittliche Anzahl von endständigen R-Gruppen an jedem Ende angeben und bei jedem Auftreten jeweils unabhängig aus einem Wert in einem Bereich von null bis 2 ausgewählt sind, und d die durchschnittliche Anzahl von (R₂SiO)-Gruppen ist und einen Wert von 30 oder mehr und gleichzeitig 500 oder weniger aufweist.

3. Zusammensetzung nach einem der vorstehenden Ansprüche, wobei der Polysiloxanvernetzer mit Silylhydridfunktionalität eine durchschnittliche chemische Struktur (II) aufweist:
R₍₃₋ₕ₎HₕSiO-(HRSiO)ₐ-(R₂SiO)_{b}-SiH_{h'}R_{(3-h')} (II)
wobei: R bei jedem Vorkommen aus Alkyl- und Arylgruppen ausgewählt ist, die ein bis 6 Kohlenstoffatome aufweisen, H ein Wasserstoffatom ist, h und h' sich auf die durchschnittliche Anzahl von endständigen Wasserstoffatomen an jedem Ende beziehen und bei jedem Vorkommen jeweils unabhängig aus einem Wert in einem Bereich von null bis 3 ausgewählt sind, das tiefgestellte a die durchschnittliche Anzahl von (HRSiO)-Gruppen pro Molekül ist und einen Wert in einem Bereich von null bis 10 aufweist, wobei h, h' und a auf derartige Weise ausgewählt sind, dass die Summe von h, h' und a 2 oder mehr ist, das tiefgestellte b die durchschnittliche Anzahl von (R₂SiO)-Gruppen pro Molekül ist und einen Wert in einem Bereich von 5 bis 200 aufweist.

4. Zusammensetzung nach einem der vorstehenden Ansprüche, wobei das Polyetheradditiv ausgewählt ist aus einem oder einer beliebigen Kombination von mehr als einem aus einer Gruppe, bestehend aus Polypropylenglykol, Polypropylen/Polyethylenglykol-Copolymer und Trimethylsiloxy-terminierten Dimethylsiloxan-[Propylenoxid/Ethylenoxid]-Copolymeren.

5. Zusammensetzung nach Anspruch 4, wobei die Trimethylsiloxy-terminierten Dimethylsiloxan-[Propylenoxid/Ethylenoxid]-Copolymere ausgewählt sind aus jenen, die eine durchschnittliche chemische Struktur (III) aufweisen:
(CH₃)₃SiO-[(CH₃)ASiO]ₘ-[(CH₃)₂SiO)ₙ-Si(CH₃)₃ (III)
wobei A -(CH₂CH₂O)ₚ-(CH₂CH(CH₃)O)_{q}-CH₃ ist, p einen durchschnittlichen Wert von 10-20 aufweist, q einen durchschnittlichen Wert von 4 bis 20 aufweist, m einen durchschnittlichen Wert von 4 bis 16 aufweist und n einen durchschnittlichen Wert von 4 bis 50 aufweist.

6. Zusammensetzung nach einem der vorstehenden Ansprüche, wobei die wärmeleitfähigen Füllstoffteilchen der Zusammensetzung, bei denen es sich nicht um plättchenförmige Bornitridteilchen handelt, ausgewählt sind aus einer Gruppe, bestehend aus sphärischem Aluminiumoxid, das einen Dv50 von 90 Mikrometer aufweist, rundem Aluminiumoxid mit einem Dv50 von 35 Mikrometern, unregelmäßigem Aluminiumoxid mit einem Dv50 von 2 Mikrometern, unregelmäßigem Zinkoxid mit einem Dv50 von 0,11-0,13 Mikrometern, sphärischem Aluminiumnitrid mit einem Dv50 von 80 Mikrometern und sphärischem Aluminiumoxid mit einem Dv50 von 2 Mikrometern, wobei die Teilchengröße Dv50 unter Verwendung eines Laserbeugungsteilchengrößenanalysators bestimmt ist.

7. Zusammensetzung nach einem der vorstehenden Ansprüche, wobei das Füllstoffbehandlungsmittel eine beliebige oder eine beliebige Kombination von mehr als einer Komponente ist, ausgewählt aus einer Gruppe, bestehend aus Alkyltrialkoxysilanen und Monotrialkoxysiloxy-terminierten Diorganopolysiloxanen.

8. Zusammensetzung nach einem der vorstehenden Ansprüche, wobei die Zusammensetzung ferner ein beliebiges oder eine beliebige Kombination von mehr als einem zusätzlichen Additiv umfasst, ausgewählt aus einer Gruppe, bestehend aus pyrogener Kieselsäure und Pigmenten.

9. Verfahren zum Verwenden der Zusammensetzung nach Anspruch 1, wobei das Verfahren das Aufbringen der Zusammensetzung zwischen und in Kontakt mit zwei Komponenten und anschließend das Erhitzen der härtbaren Zusammensetzung auf eine Temperatur über der Glasübergangstemperatur des thermoplastischen Polymers, das den Platinkatalysator einkapselt, umfasst, um die härtbare Zusammensetzung auszuhärten, während sie sich zwischen den Komponenten befindet.

10. Verfahren nach Anspruch 9, wobei die Dicke der Zusammensetzung nach Anspruch 1 einen Millimeter oder mehr beträgt, wobei die Dicke die Abmessung der Zusammensetzung ist, die sich zwischen den beiden Komponenten erstreckt.

## Revendications

1. Composition durcissable comprenant :
(a) 1,6 à 2,5 pour cent en poids d'un polymère de silicone à fonctionnalité vinyle ayant deux groupes vinyle ou plus par molécule ;
(b) au moins un agent de réticulation polysiloxane à fonctionnalité hydrure de silyle qui contient au moins deux groupes hydrure de silyle par molécule et qui est présent à une concentration permettant d'obtenir un rapport molaire entre hydrure de silyle et vinyle pour la composition qui est compris dans une plage de 0,3 à 1,0 ;
(c) un catalyseur d'hydrosilylation à base de platine encapsulé dans un polymère thermoplastique, où le polymère thermoplastique a une température de transition vitreuse comprise dans une plage de 60 à 80 degrés Celsius, telle que déterminée par la norme ASTM D7426 sur une plage de -60 à 200 °C à une vitesse de rampe de 10 °C par minute ;
(d) 93,5 à 96 pour cent en poids de particules de charge thermoconductrices autres que des particules de nitrure de bore en plaquettes ;
(e) 0,2 à 2,5 pour cent en poids de particules nitrure de bore en plaquettes ;
(f) 0,1 à 1,0 pour cent en poids d'un additif de polyéther choisi parmi l'un, ou toute combinaison de plus d'un, dans un groupe constitué de polymères à base de polyéther et de copolymères de polyorganosiloxane-polyoxyalkylène ;
(g) 0,10 à 5,0 pour cent en poids d'un agent de traitement de charge ; et
(h) zéro à 0,5 pour cent en poids d'un inhibiteur de durcissement ;
les pourcentages en poids étant relatifs au poids de la composition durcissable.

2. Composition selon la revendication 1, dans laquelle le polymère de silicone à fonctionnalité vinyle a une structure chimique moyenne (I) :
RₓVi₍₃₋ₓ₎SiO-(R₂SiO)_{d}-SiR_{y}Vi_{(3-y)} (I)
où : R est indépendamment, dans chaque occurrence, choisi parmi des groupes alkyle et aryle ayant de un à 6 atomes de carbone ; Vi est un groupe vinyle, x et y indiquent le nombre moyen de groupes R terminaux sur chaque extrémité et sont chacun indépendamment, dans chaque occurrence, choisis parmi une valeur comprise dans une plage de zéro à 2, et d est le nombre moyen de groupes (R₂SiO) et a une valeur de 30 ou plus et, en même temps, de 500 ou moins.

3. Composition selon l'une quelconque revendication précédente, dans laquelle l'agent de réticulation polysiloxane à fonctionnalité hydrure de silyle a une structure chimique moyenne (II) :
R₍₃₋ₕ₎HₕSiO-(HRSiO)ₐ-(R₂SiO)_{b}-SiH_{h'}R_{(3-h')} (II)
où : R est indépendamment, dans chaque occurrence, choisi parmi des groupes alkyle et aryle ayant de un à 6 atomes de carbone, H est un atome d'hydrogène, h et h' désignent le nombre moyen d'atomes d'hydrogène terminaux à chaque extrémité et chacun est indépendamment, dans chaque occurrence, choisi parmi une valeur comprise dans une plage de zéro à 3, l'indice a est le nombre moyen de groupes (HRSiO) par molécule et a une valeur comprise dans une plage de zéro à 10, où h, h' et a sont choisis de telle sorte que la somme de h, h' et a est de 2 ou plus, l'indice b est le nombre moyen de groupes (R₂SiO) par molécule et a une valeur comprise dans une plage de 5 à 200.

4. Composition selon l'une quelconque revendication précédente, dans laquelle l'additif de polyéther est choisi parmi l'un, ou toute combinaison de plus d'un, dans un groupe constitué de polypropylène glycol, copolymère de polypropylène/polyéthylène glycol, et copolymères de diméthlysiloxane-[oxyde de propylène/oxyde d'éthylène] à terminaison triméthylsiloxy.

5. Composition selon la revendication 4, dans laquelle les copolymères de diméthylsiloxane-[oxyde de propylène/oxyde d'éthylène] à terminaison triméthylsiloxy sont choisis parmi ceux ayant une structure chimique moyenne (III) :
(CH₃)₃SiO-[(CH₃)ASiO]ₘ-[(CH₃)₂SiO)ₙ-Si(CH₃)₃ (III)
où A est -(CH₂CH₂O)ₚ-(CH₂CH(CH₃)O)_{q}-CH₃, p a une valeur moyenne de 10 à 20, q a une valeur moyenne de 4 à 20, m a une valeur moyenne de 4 à 16, et n a une valeur moyenne de 4 à 50.

6. Composition selon l'une quelconque revendication précédente, dans laquelle les particules de charge thermoconductrices de la composition autres que du nitrure de bore en plaquettes sont choisies dans un groupe constitué d'oxyde d'aluminium sphérique ayant un Dv50 de 90 micromètres, d'oxyde d'aluminium rond ayant un Dv50 de 35 micromètres, d'oxyde d'aluminium irrégulier ayant un Dv50 de 2 micromètres, d'oxyde de zinc irrégulier ayant un Dv50 de 0,11 à 0,13 micromètre, de nitrure d'aluminium sphérique ayant un Dv50 de 80 micromètres, et d'oxyde d'aluminium sphérique ayant un Dv50 de 2 micromètres, dans laquelle la taille de particule Dv50 est déterminée à l'aide d'un analyseur de taille de particules par diffraction laser.

7. Composition selon l'une quelconque revendication précédente, dans laquelle l'agent de traitement de charge est l'un quelconque ou toute combinaison de plus d'un composant choisi dans un groupe constitué d'alkyltrialcoxysilanes et diorganopolysiloxanes à terminaison monotrialcoxysiloxy.

8. Composition selon l'une quelconque revendication précédente, dans laquelle la composition comprend en outre l'un quelconque ou toute combinaison de plus d'un additif supplémentaire choisi dans un groupe constitué de silice pyrogénée et de pigments.

9. Procédé d'utilisation de la composition selon la revendication 1, le procédé comprenant l'application de la composition entre deux composants et en contact avec ceux-ci, puis le chauffage de la composition durcissable à une température supérieure à la température de transition vitreuse du polymère thermoplastique encapsulant le catalyseur au platine pour faire durcir la composition durcissable alors qu'elle est en place entre les composants.

10. Procédé selon la revendication 9, dans lequel l'épaisseur de la composition selon la revendication 1 est de un millimètre ou plus, où l'épaisseur est la dimension de la composition s'étendant entre les deux composants.
